# EUROPÄISCHE PATENTSCHRIFT

(11) **EP 0 923 168 B1**
(45) Veröffentlichungstag und Bekanntmachung des Hinweises auf die Patenterteilung: **09.04.2008**
(21) Anmeldenummer: 98123201.0
(22) Anmeldetag: 05.12.1998
(51) Int. Cl.: H01R 13/639, H01R 13/623, G01P 1/02

(54) **Plombiervorrichtung für einen Drehwertgeber**
Sealing device for a rotational speed sensor
Dispositif de scellé pour un capteur de rotation

(30) Priorität: 09.12.1997 DE 29721694 U
(43) Veröffentlichungstag der Anmeldung: 16.06.1999
(73) Patentinhaber: VDO Automotive AG, 93055 Regensburg (DE)
(72) Erfinder: Modest, Otmar Ing., 78078 Niedereschach (DE)

(56) Entgegenhaltungen:
- EP-A- 0 750 367
- DE-A- 19 517 221
- US-A- 4 053 195
- US-A- 5 639 256

## Beschreibung

Die Erfindung betrifft eine Plombiervorrichtung für einen Drehwertgeber mit einem mit einer Anflanschfläche versehenen, im wesentlichen zylindrischen Schutzgehäuse und einem in axialer Richtung an dem Schutzgehäuse unlösbar befestigten Steckersockel, an welchem ein dem Drehwertgeber zugeordnetes und mit einem Stecker versehenes Kabel mittels einer Überwurfmutter lösbar befestigbar ist,

Bekanntlich werden derartige Drehwertgeber zur Meßwerterfassung in Fahrzeugen eingesetzt und beispielsweise am Gehäuse eines Fahrzeuggetriebes derart befestigt, daß der Meßkopf des Drehwertgebers, indem er durch die Wand des Getriebegehäuses durchgreift, einem Zahnrad des Getriebes bzw. einer speziellen Taktscheibe unmittelbar zugeordnet ist. Aufgrund der in Fahrzeugen gegebenen räumlichen Trennung zwischen dem Drehwertgeber und die Meßwerte verarbeitenden Meß- und Zählgeräten bzw. Steuer- und Regeleinrichtungen sind Übertragungsmittel erforderlich, die, falls nicht eine berührungslose Übertragung vorgesehen ist, in der Regel ein mehradriges Kabel darstellen. Das Kabel, das auch Leitungen zur Energieversorgung des Drehwertgebers umfaßt, ist mit einem mit dem Steckersockel des Drehwertgebers verbindbaren Stecker abgeschlossen und wird mittels einer Überwurfmutter an dem Steckersockel befestigt.

Wegen des dokumentarischen Charakters der erfaßten und zu übertragenden Meßwerte ist es im allgemeinen üblich Manipulationen dadurch zu erschweren, daß dem Kabel ein gepanzerter Schutzschlauch zugeordnet ist, welcher mit einer metallischen Tülle abgeschlossen ist, die ihrerseits an dem Stecker durch Quetschverbinden befestigt ist. Außerdem ist es erforderlich, sowohl die Überwurfmutter als auch den Drehwertgeber selbst bzw. dessen Befestigungsmittel zu plombieren. Dies erfolgt in der Regel mittels eines Plombendrahtes und einer die gelegte Plombendrahtschleife sichernden Bleiplombe, wobei der Plombendraht durch in geeigneter Weise an den betreffenden Bauteilen angebrachte Ösen durchzufädeln ist. Vielfach muss dabei die Plombierung in Winkeln und schlecht zugänglichen Nischen eines Getriebegehäuses vorgenommen werden. Das heißt, es bestehen erhebliche Behinderungen einen Plombendraht durch die vorgesehenen Ösen zu fädeln und es ist nahe liegend, dass aufgrund mangelnder Sorgfalt der Plombendraht in einer zu großen Schleife verlegt wird und dadurch ein Lösen des Gebers und Verändern des Abstandes zu dem abzutastenden Getriebeelement und/oder ein Lösen der Überwurfmutter, insbesondere, wenn diese mittels Renkverbindungsmittel mit dem Steckersockel verbunden ist, ermöglicht wird, ohne dass die Plombierung beschädigt wird.

Ein in einer Überwurfmutter eines Steckverbinders für eine Geberleitung, insbesondere für ein Fahrtschreibersystem, verschiebbar gehalterter Riegel, der zusammen mit einem Plombendraht, der in einer eingeschobenen Stellung des Riegels durch eine an der Überwurfmutter ausgebildete Öse und eine in dem Riegel vorgesehene Öffnung durchgezogen und verplombt wird, als Verdrehsicherung dient, ist aus EP 0 750 367 A1 bekannt.

Aufgabe der vorliegenden Erfindung ist es daher, eine Plombiervorrichtung zu schaffen, welche auch in ungünstigen Einbausituationen eine zuverlässige Plombierung gestattet und gleichzeitig das Plombieren selbst erleichtert.

Die Lösung der gestellten Aufgabe ist dadurch gekennzeichnet, dass eine erste Hülse mit einer dem Abstand zwischen der Ebene der Anflanschfläche des Drehwertgebers und der Stirnfläche der mit dem Steckersockel verbundenen Überwurfmutter entsprechenden Länge vorgesehen und auf den Drehwertgeber lose aber verdrehfest aufsteckbar ist, dass eine zweite Hülse vorgesehen ist, deren Innendurchmesser größer ist als die Außenkonturen der Überwurfmutter und deren Länge wenigstens der Höhe der Überwurfmutter entspricht, dass der ersten Hülse ein Ring konzentrisch zugeordnet ist derart, dass ein den Ring mit der ersten Hülse verbindender radialer Steg durch den Ring in axialer Richtung beidseitig überdeckt ist und
der Innendurchmesser des Ringes wenigstens gleich ist dem Außendurchmesser der zweiten Hülse,
daß an dem radialen Steg und an der zweiten Hülse Rastverbindungsmittel ausgebildet sind und
daß die erste Hülse mit wenigstens einer Sollbruchstelle versehen ist.

Ausgestaltungen der Erfindung beschreiben die Unteransprüche.

Als besonderer Vorteil der gefundenen Lösung ist hervorzuheben, daß die Plombierung lediglich durch Zusammenstecken und miteinander Verrasten zweier Hülsen erfolgt und somit das arbeitsintensive und mit einem Sicherheitsrisiko behaftete Fädeln eines Plombendrahtes und das Setzen einer Bleiplombe mittels einer Plombierzange vermieden ist. Dabei werden mit dem Zusammenstecken der beiden Hülsen sowohl die Verbindung des Drehwertgebers mit dem Getriebegehäuse als auch die Verbindung der Überwurfmutter mit dem Drehwertgeber plombiert. Bisherige für die Plombierung der überwurfmutter und des Drehwertgebers vorgesehene Ausbildungen werden mitbenutzt oder bleiben außer Funktion, mit anderen Worten, Maßnahmen am Drehwertgeber und an der Überwurfmutter sind für das Anbringen der erfindungsgemäßen Plombierung nicht erforderlich. Außerdem sei hervorgehoben, daß sich die vorgeschlagene Plombiervorrichtung aufgrund ihrer Montierbarkeit in axialer Richtung in besonderer Weise für solche Einbausituationen eignet, bei denen die Zugänglichkeit zum Einbauort des Drehwertgebers und somit das Fädeln eines Plombendrahtes und die Benutzung einer Plombierzange auch aus räumlichen Gründen erheblich erschwert sind. Als vorteilhaft hervorzuheben ist ferner die Ausführungsform einer verdeckten Rastverbindung zwischen den beiden Hülsen unter Verwendung eines gießtechnisch an einer der Hülsen angeformten konzentrischen Ringes.

Im folgenden sei die Erfindung anhand der beigefügten Zeichnungen näher erläutert. Es zeigen:
- Figur 1: eine perspektivische Darstellung der am Einbauort eines Drehwertgebers miteinander in Eingriff zu bringenden Bauteile,
- Figur 2: eine Ansicht des am Einbauort komplettierten Drehwertgebers mit einem Schnitt der dem Drehwertgeber zugeordneten Plombiervorrichtung.

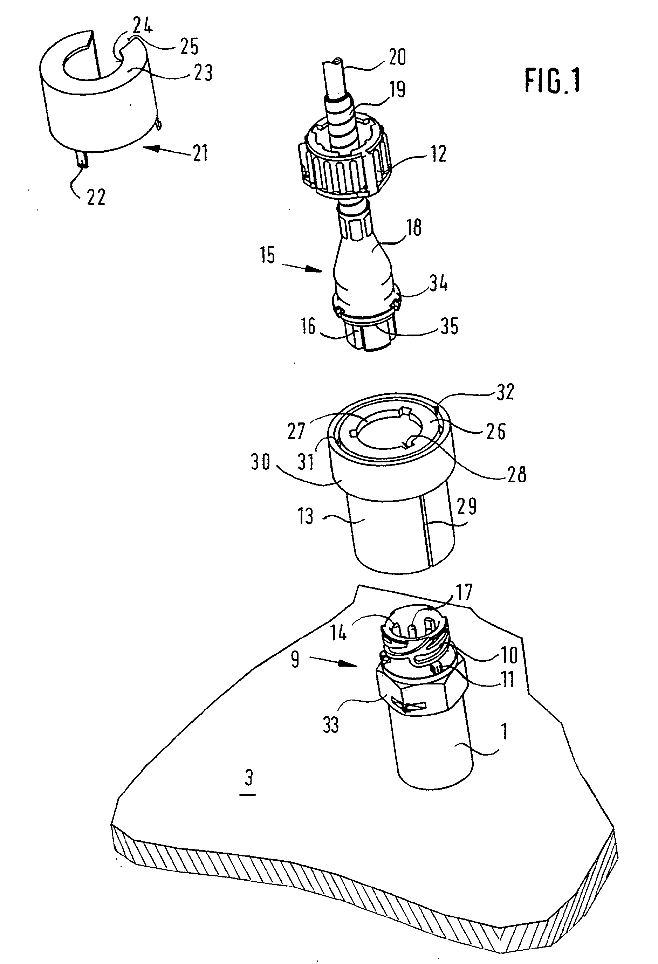

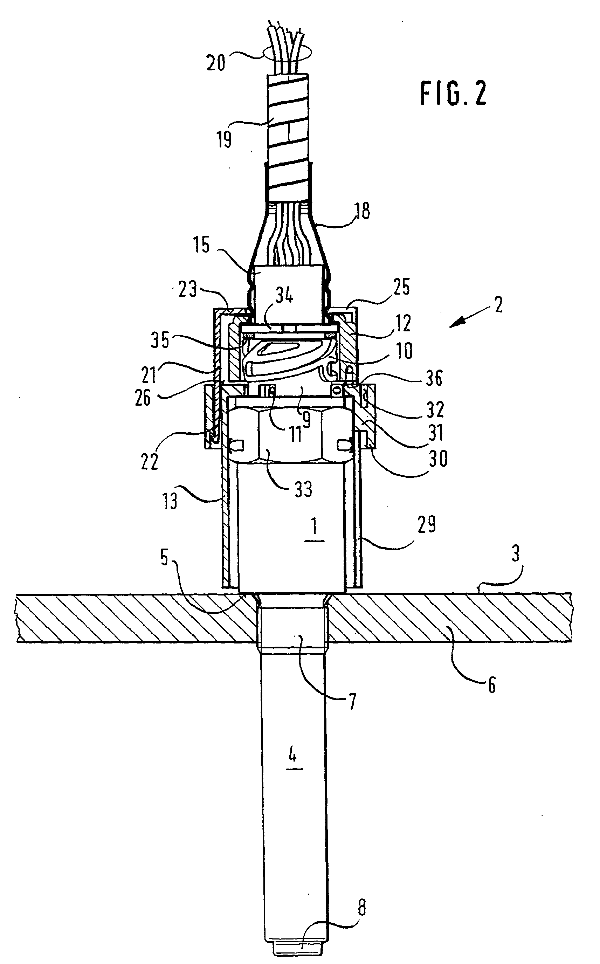

Die Figur 1 zeigt einen im eingebauten Zustand außerhalb eines Getriebegehäuses eines Fahrzeuges befindlichen Teil 1 eines gestuft ausgebildeten Schutzgehäuses eines Drehwertgebers 2. Mit 3 ist eine Ebene bezeichnet, in der sich im Einbauzustand die zwischen dem Teil 1 und einem in das Getriebegehäuse hineinragenden Teil 4 des Schutzgehäuses bestehende Schulter bzw. Anflanschfläche 5 befindet. Die Ebene 3 stellt die Außenfläche einer Wand 6 des Getriebegehäuses dar, an der der Drehwertgeber 2 mittels eines Gewindes 7, gegebenenfalls unter Verwendung einer Zwischenlegscheibe, befestigt ist. Das freie Ende des Teils 4 des Schutzgehäuses ist, wie Figur 2 zeigt, mit einer nichtmagnetischen Kappe 8 versehen, die den Meßkopf, beispielsweise eine Hallgenerator/Permanentmagnet-Kombination, stirnseitig abdeckt.

Nach außen ist der Drehwertgeber 2 mit einem mit dem Schutzgehäuse 1,4 beispielsweise durch Anbördeln fest verbundenen Steckersockel 9 abgeschlossen, an dessen Mantelseite Renkverbindungsmittel 10 sowie mehrere Ösen - in den Figuren 1 und 2 ist eine mit 11 bezeichnet - ausgebildet sind. Die Ösen 11 dienen der bisher üblichen Plombierung einer mit dem Steckersockel 9 verbindbaren Überwurfmutter 12. Sie lassen sich andererseits aber auch als Verdrehsicherung für eine gemäß der Erfindung vorgesehenen ersten Hülse 13 verwenden, das heißt an dem Drehwertgeber 2 sind in vorteilhafter Weise sowohl die herkömmliche Plombierung als auch die erfindungsgemäße Plombierung anwendbar. An der Innenseite des Steckersockels 9 sind mehrere unterschiedlich profilierte Rippen 14 ausgeformt, denen am Stecker 15 angebrachte Nute 16 zugeordnet sind. Die Rippen 14 und die Nute 16 definieren eine einzige Stellung, in der der Stecker 15 in den Steckersockel 9 einführbar ist. Mit 17 ist einer der im Steckersockel 9 eigebetteten Rundkontaktstifte bezeichnet. Wie ferner aus der Figur 1 ersichtlich ist, ist mit dem Stecker 15 eine metallische Tülle 18 verbunden, die ihrerseits mit einem gepanzerten Schutzschlauch 19 verquetscht ist, in welchem ein durch den Stecker 15 abgeschlossenes, mehradriges Kabel 20 verlegt ist.

Mit 21 ist eine zweite der Plombierung des Drehwertgebers 2 dienende Hülse bezeichnet. Die Hülse 21 ist mit Riegeln versehen, von denen einer mit 22 bezeichnet ist. Eine Stirnwand 23 weist eine Öffnung 24 auf, die dem Durchmesser der Tülle 18 entspricht. Außerdem ist die zweite Hülse 21 axial geschlitzt (25), so daß sie in radialer Richtung auf den Schutzschlauch 19 aufgesetzt werden kann. An der ersten Hülse 13 ist in dem gewählten Ausführungsbeispiel ebenfalls eine ringförmige Stirnwand 26 angeformt, und zwar derart, daß der Durchmesser der Durchgangsöffnung 27 im wesentlichen dem Außendurchmesser der Renkverbindungsmittel 10 des Steckersockels 9 entspricht. In der Stirnwand 26 vorgesehene Aussparungen, von denen eine mit 28 bezeichnet ist, sind den Ösen 11 zugeordnet. Mit 29 ist eine von mehreren an der ersten Hülse 13 angebrachter Kerben bezeichnet, die als Sollbruchstellen dienen für den Fall, daß die erfindungsgemäße Plombierung beispielsweise für einen Austausch des Drehwertgebers 2 ordnungsgemäß gelöst werden oder ein Manipulationsversuch nachgewiesen werden soll. Ein an der ersten Hülse 13 konzentrisch angeformter Ring 30 dient dem unzugänglichen Abdecken der Rastverbindungsstellen zwischen der ersten Hülse 13 und der zweiten Hülse 21. Dabei steht der Ring 30 über einen radialen Steg 31, in welchen den Riegeln 22 zugeordnete Öffnungen ausgebildet sind, mit der Hülse 13 in Verbindung. Der auf diese Weise gebildete Ringspalt 32 dient der zweiten Hülse 21 als Fassung.

Für das Anbringen des Drehwertgebers 2 und der erfindungsgemäßen Plombiervorrichtung an der Wand 6 eines Getriebegehäuses ist fogender, besonders einfacher Montageablauf erforderllich. Nach dem Einschrauben des Drehwertgebers 2, beispielsweise mittels eines am Sechskant 33 des Schutzgehäuses 1,4 angreifenden Steckschlüssels, wird die erste Hülse 13 auf den externen Teil 1 des Schutzgehäuses 1,4 aufgesteckt. Danach erfolgt das Einführen des Steckers 15 in den Steckersockel 9 und das Aufrasten der Überwurfmutter 12. Diese greift in der üblichen Weise an einem Bund 34 an, der teils am Stecker 15, teils an der Tülle 18 ausgebildet ist und verspannt unter der elastischen Wirkung eines Dichtringes 35 den Stecker 15 mit dem Steckersockel 9. In diesem Montagezustand ist die erste Hülse 13 mit geringen axialen Spiel zwischen der Wand 6 bzw. der Ebene 3 und der Stirnfläche 36 der Überwurfmutter 12 eingeschlossen. Dabei dienen die Ösen 11 im Zusammenwirken mit den Aussparungen 28 in der Stirnwand 26 - der Innendurchmesser der ersten Hülse 13 entspricht im wesentlichen dem Größtmaß des Eckenmaßes des Sechskantes 33 - als Verdrehsicherung, das heißt, sie bilden zusammen mit den Kerben 29 die Plombierfunktion. Eine alternative Bauform der ersten Hülse 13 könnte ferner darin bestehen, daß die Verdrehsicherung nicht im Zusammenwirken mit den Ösen 11 verwirklicht wird, sondern daß innerhalb der ersten Hülse 13 geeignete, sich gegenüberliegende Rippen oder Backen ausgeformt sind, deren Abstand voneinander der Schlüsselweite des Sechskants 33 entspricht. Außerdem ist es denkbar stirnseitig an der ersten Hülse 13 federnde Arme auszubilden, die im Zusammenwirken mit der Stirnfläche 36 der Überwurfmutter 12 die Aufgabe lösen, die erste Hülse 13 spielfrei zu haltern. Durch Aufstecken bzw. Einstecken der zweiten Hülse 21 in die Fassung 32 und Verrasten der Riegel 22 wird die Plombiervorrichtung komplettiert. Dabei greifen die Riegel 22 durch im Steg 31 vorgesehene Durchbrüche hindurch und wirken mit geeigneten Hinterschnitten zusammen. Dadurch entsteht eine unlösbare Verbindung der beiden Hülsen 13 und 21, wobei die Verbindungsstellen durch den Ring 30 unzugänglich abgedeckt sind. Wie insbesondere aus der Figur 2 ersichtlich ist, dient der nicht näher bezeichnete rückseitige Bund der Überwurfmutter 12 beim Aufstecken der zweiten Hülse 21 als Anschlag.

Der Vollständigkeit halber sei noch erwähnt, daß im Falle eines Schutzgehäuses, das nicht eingeschraubt sondern in die betreffende Getriebewand eingesteckt wird und die axiale Befestigung durch Verschrauben eines am Schutzgehäuse ausgebildeten im allgemeinen exzentrischen Flansches erfolgt, die erste Hülse derart ausgebildet wird, daß sie den Flansch und die Verschraubung übergreift.

## Patentansprüche

1. Plombiervorrichtung für einen Drehwertgeber (2) mit einem mit einer Anflanschfläche (5) versehenen, im wesentlichen zylindrischen Schutzgehäuse und einem in axialer Richtung an dem Schutzgehäuse unlösbar befestigten Steckersockel (9), an welchem ein dem Drehwertgeber (2) zugeordnetes und mit einem Stecker (15) versehenes Kabel (20) mittels einer Überwurfmutter (12) lösbar befestigbar ist,
**dadurch gekennzeichnet,**
**dass** eine erste Hülse (13) mit einer dem Abstand zwischen der Ebene (3) der Anflanschfläche des Drehwertgebers (2) und der Stirnfläche (36) der mit dem Steckersockel (9) verbundenen Überwurfmutter (12) entsprechenden Länge vorgesehen und auf den Drehwertgeber (2) lose aber verdrehfest aufsteckbar ist, dass eine zweite Hülse (21) vorgesehen ist, deren Innendurchmesser größer ist als die Außenkonturen der Überwurfmutter (12) und deren Länge wenigstens der Höhe der Überwurfmutter (12) entspricht,
**dass** der ersten Hülse (13) ein Ring (30) konzentrisch zugeordnet ist derart, dass ein den Ring (30) mit der ersten Hülse (13) verbindender radialer Steg (31) durch den Ring (30) in axialer Richtung beidseitig überdeckt ist und der Innendurchmesser des Ringes (30) wenigstens gleich ist dem Außendurchmesser der zweiten Hülse (21),
**dass** an dem radialen Steg (31) und an der zweiten Hülse (21) Rastverbindungsmittel ausgebildet sind und
**dass** die erste Hülse (13) mit wenigstens einer Sollbruchstelle (29) versehen ist.

2. Plombiervorrichtung nach Anspruch 1,
**dadurch gekennzeichnet,**
**daß** an der zweiten Hülse (21) axial gerichtete, radial federnde Riegel (22) ausgebildet und in dem radialen Steg (31) den Riegeln (22) zugeordnete Durchbrüche vorgesehen sind.

3. Plombiervorrichtung nach Anspruch 1,
**dadurch gekennzeichnet,**
**daß** die zweite Hülse (21) als eine radial federnde Klammer ausgebildet ist, indem sie axial geschlitzt ist (25).

4. Plombiervorrichtung nach Anspruch 1,
**dadurch gekennzeichnet,**
**daß** in Anwendung bei einem Drehwertgeber (2) mit einem einschraubbaren Schutzgehäuse (1, 4) die Innenwand der ersten Hülse (13) derart ausgebildet ist, daß die Hülse (13) mit einem dem Einschrauben des Schutzgehäuses (1, 4) dienenden Sechskant (33) verdrehsichernd zusammenwirkt.

5. Plombiervorrichtung nach Anspruch 1,
**dadurch gekennzeichnet,**
**daß** an der ersten Hülse (13) stirnseitig eine ringförmige Wand (26) mit radial gerichteten Aussparungen (28) angeformt ist, wobei die Aussparungen (28) am Steckersockel (9) ausgebildeten Konturen (Ösen 11) zugeordnet sind.

6. Plombiervorrichtung nach Anspruch 1,
**dadurch gekennzeichnet,**
**daß** die zweite Hülse (21) topfförmig ausgebildet ist, wobei in der Stirnwand (23) eine dem Durchtritt des Kabels (19, 20) dienende Öffnung (24) vorgesehen ist.

7. Plombiervorrichtung nach Anspruch 1,
**dadurch gekennzeichnet,**
**daß** an der ersten Hülse (13) der Stirnfläche (36) der Überwurfmutter (12) zugeordnete, axial federnde Arme ausgebildet sind.

## Claims

1. Sealing device for a rotational speed sensor (2) having a substantially cylindrical protective housing provided with a flanging surface (5) and a plug socket (9) which is non-detachably fastened to the protective housing in the axial direction and to which a cable (20), which is associated with the rotational speed sensor (2) and provided with a plug (15), can be detachably fastened by means of a cap nut (12), **characterized in that** a first sleeve (13) having a length corresponding to the distance between the plane (3) of the flanging surface of the rotational speed sensor (2) and the end face (36) of the cap nut (12) connected to the plug socket (9) is provided and can be attached to the rotational speed sensor (2) in a loose but rotationally fixed manner, **in that** there is provided a second sleeve (21), the internal diameter of which is greater than the outer contours of the cap nut (12) and the length of which corresponds at least to the height of the cap nut (12), **in that** a ring (30) is concentrically associated with the first sleeve (13) in such a way that a radial web (31) connecting the ring (30) to the first sleeve (13) is covered on either side by the ring (30) in the axial direction and the internal diameter of the ring (30) is at least equal to the external diameter of the second sleeve (21), **in that** latching connection means are configured on the radial web (31) and on the second sleeve (21) and **in that** the first sleeve (13) is provided with at least one predetermined breaking point (29).

2. Sealing device according to Claim 1, **characterized in that** axially oriented, radially resilient bolts (22) are configured on the second sleeve (21) and apertures, associated with the bolts (22), are provided in the radial web (31).

3. Sealing device according to Claim 1, **characterized in that** the second sleeve (21) is configured as a radially resilient clamp **in that** it is axially slotted (25).

4. Sealing device according to Claim 1, **characterized in that**, when used in a rotational speed sensor (2) having a screw-in protective housing (1, 4), the inner wall of the first sleeve (13) is configured in such a way that the sleeve (13) interacts with a hexagon (33) serving to screw in the protective housing (1, 4), thereby having an anti-twist effect.

5. Sealing device according to Claim 1, **characterized in that** an annular wall (26) comprising radially oriented recesses (28) is formed integrally with the first sleeve (13) at the end side, the recesses (28) being associated with contours (eyelets 11) formed on the plug socket (9).

6. Sealing device according to Claim 1, **characterized in that** the second sleeve (21) is pot-shaped, an opening (24) allowing the cable (19, 20) to be fed through being provided in the end wall (23).

7. Sealing device according to Claim 1, **characterized in that** axially resilient arms associated with the end face (36) of the cap nut (12) are configured on the first sleeve (13).

## Revendications

1. Dispositif de plombage pour un capteur de rotation (2), comportant un boîtier de protection essentiellement cylindrique doté d'une surface de bridage (5) et une prise de connecteur (9) fixée dans le sens axial, d'une façon inamovible, au boîtier de protection, un câble (20) correspondant au capteur de rotation (2) et doté d'un connecteur (15) pouvant être fixé d'une façon amovible à ladite prise de connecteur au moyen d'un écrou d'accouplement (12),
**caractérisé par le fait**
**qu'**il est prévu un premier manchon (13) ayant une longueur correspondant à la distance entre le plan (3) de la surface de bridage du capteur de rotation (2) et la surface frontale (36) de l'écrou d'accouplement (12) lié à la prise de connecteur (9) et qu'il peut être enfiché d'une façon amovible, mais en blocage de rotation, sur le capteur de rotation (2),
**qu'**il est prévu un deuxième manchon (21) dont le diamètre intérieur est supérieur aux contours extérieurs de l'écrou d'accouplement (12) et dont la longueur correspond au moins à la hauteur de l'écrou d'accouplement (12),
**qu'**une bague (30) est affectée d'une façon concentrique au premier manchon (13) de manière telle qu'une barrette radiale (31) liant la bague (30) au premier manchon (13) est recouverte des deux côtés dans la direction axiale par la bague (30) et que le diamètre intérieur de la bague (30) est au moins égal au diamètre extérieur du deuxième manchon (21),
**que**, sur la baguette radiale (31) et sur le deuxième manchon (21), sont ménagés des moyens de liaison à crans et
**que** le premier manchon (13) est doté d'au moins un point de rupture (29).

2. Dispositif de plombage selon la revendication 1,
**caractérisé par le fait**
**que**, sur le deuxième manchon (21), sont ménagées des targettes (22) dirigées dans le sens axial et faisant ressort dans le sens radial et que des ouvertures correspondant aux targettes (22) sont prévues dans la barrette radiale (31).

3. Dispositif de plombage selon la revendication 1,
**caractérisé par le fait**
**que** le deuxième manchon (21) est conçu comme agrafe faisant ressort dans le sens radial par le fait qu'il est fendu dans le sens axial (25).

4. Dispositif de plombage selon la revendication 1,
**caractérisé par le fait**
**que**, dans une application pour un capteur de rotation (2) comportant un boîtier de protection (1, 4) vissé, la paroi intérieure du premier manchon (13) est configuré de manière telle que le manchon (13) concoure, pour empêcher une rotation, avec un hexagone (33) servant à visser le boîtier de protection (1, 4).

5. Dispositif de plombage selon la revendication 1,
**caractérisé par le fait**
**que**, sur le premier manchon (13), du côté frontal, une paroi en forme de bague (26) est ménagée avec des évidements (28) dirigés dans le sens radial, les évidements (28) correspondant à des contours (oeillets 11) ménagés sur la prise du connecteur (9).

6. Dispositif de plombage selon la revendication 1,
**caractérisé par le fait**
**que** le deuxième manchon (21) est conçu en forme de pot, une ouverture (24) étant prévue dans la paroi frontale (23) et servant au passage du câble (19, 20).

7. Dispositif de plombage selon la revendication 1,
**caractérisé par le fait**
**que**, sur le premier manchon (13), sont ménagés des doigts faisant ressort dans le sens axial et correspondant à la surface frontale de l'écrou d'accouplement (12).
